(19) Europäisches Patentamt
European Patent Office
Office européen des brevets

(11) Veröffentlichungsnummer: **0 413 085 A2**

(12) **EUROPÄISCHE PATENTANMELDUNG**

(21) Anmeldenummer: **90106321.4**

(22) Anmeldetag: **03.04.90**

(51) Int. Cl.[5]: **C08K 13/04**, C08L 67/06, //(C08K13/04,7:14,5:521)

(30) Priorität: **17.08.89 DE 3927090**

(43) Veröffentlichungstag der Anmeldung: **20.02.91 Patentblatt 91/08**

(84) Benannte Vertragsstaaten: **BE DE ES FR GB IT NL SE**

(71) Anmelder: **Firma Carl Freudenberg**
**Höhnerweg 2-4**
**D-6940 Weinheim/Bergstrasse(DE)**

(72) Erfinder: **Stock, Claude**
**130, Rue de la Libération**
**F-67260 Keskastel(FR)**
Erfinder: **Seethaler, Toni, Dr.**
**Neckarstrasse 5**
**D-6943 Birkenau(DE)**
Erfinder: **Blümler, Norbert**
**Auf der Entenweide 8**
**D-6944 Hemsbach(DE)**

(54) **Färbbare Polyester-BMC-Masse.**

(57) Die Formulierung einer Polyester-BMC-Masse ist beliebig und homogen einfärbbar bei niederen Schrumpfwerten, wenn sie als oberflächenreaktives Reagenz eine Verbindung der Formel
$R\text{-}(\text{-}X\text{-})_n\text{-}OPO_3H_2$
(X = Ethylenoxid oder Propylenoxid,
n = 0, 1, 2, 3, ....., 40,
R = aromatischer oder aliphatischer Rest mit einer Kohlenstoffzahl von 5 bis 40)
in Gewichtsanteilen von 0,3 bis 5, 250 bis 350 Gewichtsteile mineralischen Füllstoff und gegebenenfalls, zur Ergänzung des UP-Harz-Systems auf insgesamt 100 Gewichtsteile, bis zu 50 Gewichtsteile im Styrolmonomer gelöstes Polystyrol oder dispergiertes Polyethylen enthält, die Mengen jeweils bezogen auf 152,5 bis 372,5 Gewichtsteile der Grundbestandteile der Masse.



Xerox Copy Centre

Die Erfindung betrifft eine Formulierung für färbbare Polyester-BMC-Massen für die Schmelzkerntechnik. BMC ist die allgemein gebräuchliche Abkürzung für bulk moulding compound und bezeichnet glasfaserverstärkte, duroplastische Harzmassen, die zu kompliziert strukturierten Formteilen aushärtbar sind.

Die hierzu verwendbaren Harze sind ungesättigte Polyester-(UP-) oder Vinylesterharze. Insbesondere im Automobilbau sind damit wegen der rationellen Spritzgieß- und Preßtechnik z.B. hochbeanspruchbare Zylinderkopf- und Ölwannendeckel, Heckklappen, Ansaugkrümmer oder Stoßfänger herstellbar.

Je nach Einsatzzweck lassen sich die physikalischen und mechanischen Eigenschaften der BMC-Massen einstellen durch die Auswahl der Harze, Additive, Härter, Füllstoffe und Verstärkungsfasern. Eine ausführliche Beschreibung der einzusetzenden Ausgangsstoffe und deren Wirkungen ist enthalten in Kunststoff-Handbuch, 2. Auflage (1988), 288 bis 291, wo der derzeitige Stand der Technik umfassend dargestellt wird, wobei das dort für die SMC-Technik (Herstellung flächiger Werkstücke) Gesagte in identischer Weise für BMC-Massen zutrifft.

Wärmehärtbare und thermoplastische Kunststoffe erfahren beim Erstarren in geschlossenen Formen (Preß-, Spritzgießwerkzeugen) eine Volumenkontraktion, die zur Folge hat, daß im kalten Zustand die Abmessungen der geformten Teile um das Schwindmaß kleiner sind als die entsprechenden Maße des Werkzeugs. Um diesen Effekt der Schwindung zu verringern, werden LS- und LP- UP-Harze eingesetzt, deren Verwendung qualitativ gute Formteiloberflächen ermöglicht: Low profile (LP)-Harze sind Grundbausteine für schwindungsarme, verstärkte UP-Formmassen, die bei über 100 °C liegenden Temperaturen gehärtet werden. Es handelt sich um Kombinationen von UP-Harzen mit thermoplastischen Additiven (LP-Additiven), die im monomeren Anteil des Systems, meist in Styrol, dispergiert oder gelöst sind. Der schwindungsausgleichende Effekt kommt dadurch zustande, daß der Thermoplast sich während des fortschreitenden Vernetzungsvorganges im Harzsystem als disperse Phase abscheidet und damit monomeres Styrol einschließt oder gelöst enthält. Dieses Styrol nimmt zunächst nicht an der Copolymerisation der aus UP-Harz plus Styrol bestehenden Phase teil und entwickelt einen der Härtungstemperatur und der freiwerdenden Reaktionswärme entsprechenden Dampfdruck. Die dadurch bewirkte Volumenvergrößerung der dispersen Phase kompensiert die Schwindung des vernetzenden UP-Harzes. Erst wenn sich dieses als äußere Phase verfestigt hat, polymerisiert auch das in den dispergierten Teilen vorhandene Styrol.

Der Zusatz von LP (low profile)-Additiven führt zu einer Verringerung der Härtungsschwindung von UP-Standardharzen auf minus 0,04 % bis hinauf zu plus 0,04 %, d.h. es tritt in letzterem Fall sogar eine Überkompensation der den UP-Harzen eigenen Schwindung bis zur Dehnung auf.

LS (low shrink)-Additive führen demgegenüber lediglich zu einer Verminderung der Schwindung bis minus 0,06 %. Sie sind daher für die Schmelzkern-Technik nicht geeignet: Der Werkstoff schrumpft bei diesem Verfahren so intensiv auf den Kern auf, daß er Risse erleidet. Daher werden in der Schmelzkerntechnik ausschließlich UP-Massen mit LP-Charakteristik eingesetzt. Eine ausführliche Abhandlung über den Kenntnisstand bezüglich der Anwendungsgebiete und Eigen-schaften von LS- und LP-Harzen ist im Kunststoff-Handbuch an genannter Stelle enthalten.

An komplizierten Formteilen, wie Ansaugkrümmern, Kapselungen und Umhüllungen in Motoren, treten unter Betriebsbedingungen stets hohe Kräfte auf, bedingt durch Schwingungen, die durch Fahrwerk und Motor, insbesondere bei Dieselmotoren, verursacht werden. Diese Kräfte können zur Zerstörung der Bauteile durch Rißbildung und Bruch führen, wenn diese selbst bereits innere Spannungen und Verzugserscheinungen aufweisen, so daß eine geringe Mehrbelastung von außen bereits ein zerstörerisches Maß an Biege- oder Scherkräften erzeugen kann.

Es ist daher bisher unumgänglich gewesen, zur Herstellung dieser Teile UP-Harze mit LP-Charakteristik einzusetzen. Diese sind jedoch wegen des bei der Härtung auftretenden Weißeffekts nicht gleichmäßig einfärbbar; es entstehen auf der Werkstückoberfläche Schlieren und Flecken. Ferner sind Einfärbungen mit beliebigen Farbpigmenten, insbesondere die Schwarz- oder Weiß-Einfärbung, bei LP-Systemen nicht möglich, weil wegen des auftretenden Zweiphasensystems in diesen Harzen keine klaren, homogenen Farbtönungen erzielbar sind (Kunststoff-Handbuch (1988) 290).

Gerade dieses Einfärben gewinnt jedoch, insbesondere in der Automobil-Industrie, zunehmend an Bedeutung: Auch Motorenteile unterliegen dem Design; so ist z.B. eine Tiefschwarz-Färbung von Ansaugkrümmern erwünscht. Ferner werden Überlegungen bezüglich der Verschiedenfarbigkeit unterschiedlicher Motorenbauteile, wie Rohrverbindungen oder Kapselungen, vermehrt in der Automobil-Industrie angestellt.

Der Stand der Technik konnte bisher aus den obengenannten Gründen solche Forderungen nach homogener und beliebiger Einfärbbarkeit für duroplastische Polyester-BMC-Formmassen, die eine LP-Charakteristik aufweisen, nicht erfüllen.

Die Aufgabe der vorliegenden Erfindung besteht darin, eine Formulierung für Polyester-BMC-Massen anzugeben, die eine LP-Charakteristik besitzen und dabei dennoch in beliebiger Farbe und homogen einfärbbar sind und die zerstörungsfrei auch im Schmelzkernverfahren auch zu Formkörpern mit komplizierter Struktur formbar sind, wobei deren Festigkeit diejenige bisheriger Werkstücke aus Polyester-BMC-Formmassen mit LP-Eigenschaften erreicht oder übertrifft, um für den Einsatz auch in oder an beweglichen und erschütterten Teilen, wie Motoren von Kraftfahrzeugen, einsetzbar zu sein.

Die Lösung dieser Aufgabe besteht in einer BMC-Masse aus faserverstärktem UP-Harz gemäß dem Oberbegriff des Patentanspruchs und ist durch dessen kennzeichnende Merkmale charakterisiert. Sie besitzt die Eigenschaften einer low profile- Formulierung.

Die Grundkomponente besteht aus 100 Gewichtsteilen Harzmasse aus ungesättigtem Polyester oder Vinylester, in der bis zu 50 Gewichtsteile ein thermoplastisches, schrumpfkompensierendes Additiv sein können. Geeignete UP-Harze sind Malein säure-, Orthophthalsäure, Isophthalsäure-, Terephthalsäure-und Bisphenol-A- Harze. Sie sind meist bereits als Lösungen in Styrolmonomer im Handel erhältlich. Gleiches gilt für das schrumpfkompensierende Polymer.

Es kann erforderlich sein, eine Trennung der liquiden von den festen Bestandteilen der Formulierung, wie sie unter Verarbeitungstemperaturen und -drucken häufig auftritt, dadurch zu vermeiden, daß der Formulierung bis zu 3 Gewichtsteile Eindickreagenz zugesetzt werden. Zweckmäßig werden Oxide oder Hydroxide von Elementen der zweiten Haupt-oder Nebengruppe des Periodensystems verwendet.

Als innere Trennmittel zum Entformen, in Mengen von 1 bis 6 Gewichtsteilen eingesetzt, dienen Zink- oder Calcium-Stearat.

In der Formulierung sind 1 bis 4 Gewichtsteile Polymerisationsinitiator enthalten; geeignet sind organische Peroxide, z.B. Alkylsalze der Perbenzoesäure.

Vor allem bei kalthärtenden Massen ist es zweckmäßig, bis zu 4 Gewichtsteile Polymerisationsbeschleuniger einzusetzen; bewährt hat sich hierbei z.B. Cobalt-Octanoat (das Cobaltsalz der $C_8$-Säure (Octansäure)).

Farbpigmente einer beliebigen Farbe können in Mengen von 0,5 bis 5 Gewichtsteilen vorhanden sein, je nach Deckkraft und gewünschter Intensität. Die Farben können organischer oder anorganischer Natur sein; organisch jedoch nur, soweit sie die Verarbeitungs- und Einsatzbedingungen der Formmassen oder Formteile aushalten. Dies ist dem Fachmann geläufig, und eine Auswahl von geeigneten Farbpigmenten mit Eigen-schaften wird im Kunststoff-Handbuch, 2. Auflage (1988), Seite 183 bis 193, beschrieben.

Die verstärkenden Glasfasern werden je nach gewünschter Festigkeit in Gewichtsanteilen von 50 bis 250 der Mischung zuletzt zugesetzt - z.B. bis zu 60 Gew.-% an der Gesamtmischung bei der Herstellung von Stoßfängern. Ihr Durchmesser liegt zweckmäßig im Bereich von 8 bis 30 $\mu$m, ihre Länge beträgt 1 bis 30 mm.

Bis zu 0,5 Gewichtsteile Polymerisationsinhibitor können der Mischung zugefügt werden, um deren Lagerstabilität zu verbessern oder den Reaktionsverlauf zu steuern; die Fließzeit der Formulierung im Werkzeug wird dadurch beeinflußt. Man verwendet hierzu z.B. p-Benzochinon.

Ferner sind in der Mischung mineralische Füllstoffe mit einer Korngrößenverteilung von 0,5 $\mu$m bis 100 $\mu$m sowie ein oberflächenreaktives Reagenz vorhanden.

Erfindungswesentlich ist vor allem der Zusatz dieses oberflächenreaktiven Reagenzes. Seine allgemeine Formel lautet

$R\text{-}(\text{-}X\text{-})_n\text{-}OPO_3H_2$

mit

X = Ethylenoxid oder Propylenoxid;

n = ganze Zahl von 0 bis 40;

R = aromatischer oder aliphatischer Rest mit 5 bis 40 Kohlenstoffatomen.

Der Zusatz dieser Komponente führt zu mehreren unerwarteten Vorteilen:

Das oberflächenreaktive Reagenz vermittelt den Kontakt zwischen Harz und Füllstoff; man gibt so viel Reagenz zur Mischung, daß die Viskosität der Formulierung (zweckmäßigerweise noch vor der Zugabe von Glasfasern) ein Minimum erreicht. Der homogen zumischbare Anteil der Füllstoffe wird wesentlich erhöht um bis zu 20 Gew.- oder Vol.-%. Dies führt dazu, daß die Schwindung des UP-Harzes kompensiert oder überkompensiert wird, da bei der dreidimensionalen Vernetzung des Harzes die molekularen Bausteine um die Füllstoffe herum vernetzen müssen und die entstehende Aufweitung des molekularen Polymergitters nach dem Entformen im fertigen Werkstück gleichsam eingefroren ist.

Bisher konnte ein solch hoher Füllstoffgehalt nicht allein durch homogenes Einmischen in die UP-Masse erzielt werden; man mußte einen Füllstoffanteil direkt vor der Verarbeitung zusetzen, weswegen mechanische Inhomogenitäten auftraten.

Eine gleichmäßige, schlieren- und fleckenfreie Einfärbung von Polyester-UP-Harzen mit LP-Additiven war bisher ebenfalls unmöglich.

Der Einsatz des oberflächenreaktiven Reagenzes ermöglicht es ferner erstmals, unter Verwendung der LS-Additive Polystyrol oder Polyethylen, homogen einfärbbare Duroplast-Harze mit LP-Charakteristik zu

erhalten. Dies wiederum bietet den Vorteil, daß auf die bisher erforderlichen LP-Additive, die insbesondere die homogene Farbgebung verhinderten, verzichtet werden kann.

Als Füllstoffe sind beispielsweise die aus der Literatur und dem Fachmann bekannten Stoffe Calziumcarbonat, Aluminium-trihydrat, Dolomit, Bariumsulfat und Kaolin verwendbar.

Von großer Bedeutung für die Erfindung ist ferner, daß die erhaltenen Formkörper bezüglich ihrer mechanischen Eigenschaften, wie Biege-E-Modul, Biegefestigkeit, Randfaserdehnung, Schlagzähigkeit und Kerbschlagzähigkeit keinerlei Verluste aufweisen.

Bereits ohne Zusatz des LS-Additivs erhält man Polyester-BMC-Massen mit niedriger Schwindung; setzt man dieses jedoch dem erfindungsgemäßen Harz dazu, so kann eine erhebliche Schwindungskompensation bis hin zu einer geringen Überkompensation (Dehnung) erzielt werden. Dieser Effekt macht die Verarbeitung der Masse in Schmelzkerntechnik möglich.

Der größte Vorteil besteht jedoch darin, daß die Formulierungen mit beliebigen Farbstoffen in beliebiger Farbsättigung absolut homogen einfärbbar sind. Dieser Vorteil konnte bisher mit keiner LP-Polyester-BMC-Masse erreicht werden.

Ein weiterer überraschender Vorteil ist der Umstand, daß das Kriechverhalten des fertigen Werkstücks unter Druck wesentlich verbessert wird: Materialfluß an den Anschraubaugen, wie sie bei unsachgemäßer Montage (zu hohes Drehmoment) an konventionellen BMC-Formkörpern auftraten, werden hier nicht mehr beobachtet.

Durch die erfindungsgemäße Formulierung werden zudem die Werkstoffkosten gesenkt, da der in größeren Mengen einsetzbare Füllstoff billig ist und somit weniger Harzmasse eingesetzt zu werden braucht. Ferner sind LS-Additive deutlich billiger als LP-Additive.

Selbstverständlich gelten die Sachverhalte der erfindungsgemäßen Polyester-BMC-Masse auch für Polyester-SMC-Massen, die für die Herstellung flächiger Formkörper geeignet sind, mit den für diese typischen Veränderungen, insbesondere, wenn diese ebenfalls homogen einfärbbar sein sollen.

Im folgenden werden die Vorteile der erfindungsgemäßen Polyester-BMC-Masse an Rezepturbeispielen verdeutlicht und mit dem Stand der Technik verglichen.

Vergleichsbeispiel (low profile-Polyester-BMC; Stand der Technik):

Tabelle 1

| Gew.-Teile | Komponente | Spezifikation |
|---|---|---|
| 70 | UP-Harz aus Orthophthalsäure und 1,3-Propandiol, in Styrolmonomer | Styrol-Massenanteil: 35 % (DIN 16 945, 4.14); Viskosität: 1350 mPa.s (DIN 53 214) |
| 30 | LP-Additiv aus Polyvinylacetat, in Styrolmonomer | Styrol-Massenanteil: 60 % (DIN 16 945, 4.14); Viskosität: 2000 mPa.s (DIN 53 214) |
| 200 | Füllstoff: Calciumcarbonat | Mittlerer Korndurchmesser: 8 µm; BET-Oberfläche: 1,5 $m^2/g$ |
| 1,5 | Eindickreagenz: 35 % MgO in monomerfreiem UP-Harz | Viskosität (25°C): 12000 bis 18000 mPa.s |
| 4 | Inneres Trennmittel: Zinkstearat | Pulver |
| 2 | Polymerisationsinhibitor: Tert.-butyl-perbenzoat | flüssig |
| 2 | Pigmentpaste "schwarz" mit Bindemittel aus Diallylphthalat und styrolhaltigem UP-Harz | Viskosität: 6000 mPa.s (DIN 53 214) |
| 60 | Glasfasern | d: 10 µm; Länge: 6 mm |

Aus diesem Gemisch wurde im Schmelzkernverfahren ein Ansaugkrümmer für einen Kraftfahrzeugmotor hergestellt. Wegen des geringen Füllstoffgehaltes kriecht das Material, wenn es bei höheren Temperaturen mechanisch belastst wird. Die Anschraubaugen müssen daher mit Inserts versehen werden. Ein Lockern der Schraubverbindungen ist dennoch unter dem Einfluß von Erschütterungen, insbesondere durch Dieselmotoren, nicht auszuschließen.

Die Füllstoffe besitzen hydrophile Oberflächen; die ungesättigten Polyester dagegen sind hydrophob. In Styrol treten daher Unverträglichkeiten beider Komponenten miteinander auf, was zur Bildung unerwünschter Agglomerate führt. Mechanische Defekte an den Formteilen unter Belastung sind die Folge.

Die Masse ist, bedingt durch das Vorhandensein eines LP-Additivs, nicht homogen einfärbbar; der aus

ihr hergestellte Ansaugkrümmer vermittelt den Eindruck, als bestehe er aus fehlerhaftem Material und sei nicht "aus einem Guß": Seine Oberfläche hat ein schmutzig-graues, Schlieren aufweisendes, marmorartiges Aussehen.

Beispiel 1 (schwarz eingefärbte Polyester-BMC-Masse):

Tabelle 2

| Gew.-Teile | Komponente | Spezifikation |
|---|---|---|
| 70 | UP-Harz aus Maleinsäure und 1,3 - Propandiol, in Styrolmonomer | Styrol-Massenanteil: 33 % (DIN 16 945, 4.14); Viskosität: 1100 mPa.s (DIN 53214) |
| 30 | LS-Additiv aus Polystyrol, in Styrolmonomer | Styrol-Massenanteil: 67 % (DIN 16 945, 4.14); Viskosität: 6500 mPa.s (DIN 53 214) |
| 3 | Oberflächenreaktives Reagenz: 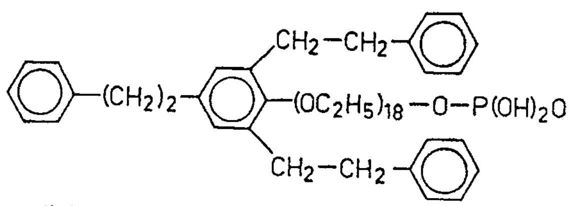 Ω-(tris-2,4,6-ethylphenyl)phenyl-polyethyloxy-Phosphat | |
| 300 | Füllstoff: Calciumcarbonat | Mittlerer Korndurchmesser: 8 µm; BET-Oberfläche: 1,5 m²/g |
| | Eindickreagenz, inneres Trennmittel, Polymerisationsinitiator wie Tabelle 1 | |
| 2 | Färbemittel: Ruß | Mittlerer Korndurchmesser: 17 mm; BET-Oberfläche: 150 m²/g |
| 60 | Glasfasern | Durchmesser: 10 µm; Länge: 6 mm |

Beispiel 2 (weiß eingefärbte Polyester-BMC-Masse):

Bei ansonsten gleicher Rezeptur wie in Beispiel 1 bestehen die folgenden Änderungen:
Tabelle 3
- Füllstoff: Dolomit (Ca-Mg-Carbonat);
Mittlerer Durchmesser: 7,5 µm;
BET-Oberfläche: 0,46 $m^2/g$
- Färbemittel: 5 Gew.-Teile Rutil ($TiO_2$);
mittlerer Durchmesser: 0,3 µm;
Dichte: 4,0 $g/cm^2$;
$TiO_2$-Gehalt: 92,5 %

Die Dimensionsänderungen der gemäß den Beispielen hergestellten Formkörper wurden gemessen an Platten mit den Maßen 120 x 120 x 4 ($mm^3$) nach DIN 53 451 unter Verwendung eines Preßwerkzeuges nach DIN 53 470. Ein negatives Vorzeichen bedeutet "Schwindung", ein positives "Dehnung".

Tabelle 4

| Formulierung gemäß | Dimensionsänderung (%) |
|---|---|
| Vergleichsbeispiel | -0,03 |
| Beispiel 1 | +0,11 |
| Beispiel 2 | +0,10 |

Aus Tabelle 4 wird ersichtlich, daß mit der Erfindung auch bei sehr hohen Füllstoff-Anteilen und bei Verwendung von Additiven mit low shrink-Charakter Dehnungswerte erzielt werden, wie sie bisher nur mit low profile-Zusätzen unter Verzicht auf die homogene Färbbarkeit zu erreichen waren.

Aus der Formulierung gemäß Tabelle 2 (Beispiel 1) wurde mittels Schmelzkerntechnik ein Ansaugkrümmer hergestellt. Seine Oberfläche besitzt einen homogenen, mattschwarzen Glanz und betont den Eindruck eines Qualitäts-Kunststoffes. Die schwarze Farbe deckt die Eigenfärbungen aller enthaltenen Komponenten gleichförmig ab. Erst stärkere Verschmutzungen durch Ölnebel oder Verbrennungsrückstände des Kraftfahrzeug-Motors sind überhaupt deutlich erkennbar; ein einfaches Abwischen mit einem Lappen läßt wieder die glänzende Oberfläche hervortreten.

BMC-Formkörper mit weißer Einfärbung gemäß Beispiel 2 (Tabelle 3) finden vor allem in der Haushaltstechnik und im Freizeitbereich Anwendung: So können z.B. Gehäuse für Küchen-Kleingeräte oder Spielwaren hergestellt werden, welche eine ästhetisches Äußeres aufweisen. Hier ist besonders eine gleichmäßige Oberflächen-Farbgüte mit hohem Glanz erwünscht.

Gemäß Beispiel 2 wurde daher in einer Presse ein Becher hergestellt. Die Preßtemperatur betrug 150 °C, der Preßdruck 250 bar. Der erhaltene Becher besaß einen Durchmesser von 74 mm (oben) und 58 mm (unten) bei einer Höhe von 93,5 mm und einer Wandstärke von 1,5 mm. Seine Oberfläche war rein weiß und glänzend; Inhomogenitäten, wie sie durch die Füllstoff- oder Harz-Schlieren mit den Rezepturen des Standes der Technik oft auftraten, werden hier nicht beobachtet. Das hygienische Aussehen und ebensolche Eigenschaften machen diese rein weißen Formteile insbesondere für Sanitärprodukte und für Abdeckungen von z.B. Waschmaschinen geeignet.

Beispiel 3:

Ein Austausch des oberflächenreaktiven Reagenzes der Beispiele 1 und 2, welches im Handel erhältlich ist, gegen die präparativ hergestellte Verbindung

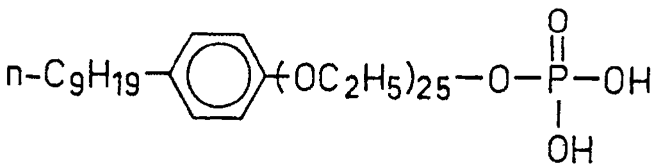

Ω-(4-nonyl)-phenyl-polyethyloxy-phosphat

in gleichen Gewichtsanteilen und bei gleichen sonstigen Rezeptur-Bestandteilen wie in denen der Beispiele 1 und 2 erbrachte die gleichen positiven Ergebnisse, wie sie mit Omega-(tris-2,4,6-ethylphenyl)-phenylpolyethyloxy-Phosphat erhalten wurden. Auch alle Meßwerte sowie die hervorragende Einfärbbarkeit sind mit denen der vorstehend beschriebenen, erfindungsgemäß hergestellten Formkörper nahezu identisch.

## Ansprüche

Färbbare Polyester-BMC-Masse, bestehend aus
100 Gewichtsteilen einer Harzkomponente, die zusammengesetzt ist aus 50 bis 100 Gewichtsteilen in Styrolmonomer gelösten oder dispergierten UP- oder Vinylesterharzes, kombiniert mit 50 bis 0 Gewichtsteilen eines in Styrolmonomer gelösten, schrumpfkompensierenden Thermoplasten;
bis zu 3 Gewichtsteilen Eindickreagenz;
1 bis 6 Gewichtsteilen innerem Trennmittel;
1 bis 4 Gewichtsteilen Polymerisationsinitiator;
bis zu 4 Gewichtsteilen Polymerisationsbeschleuniger;
0,5 bis 5 Gewichtsteilen Farbpigmenten;
50 bis 250 Gewichtsteilen Glasfasern mit Durchmessern von 8 bis 30 µm und Längen von 1 bis 30 mm;
bis zu 0,5 Gewichtsteilen Polymerisationsinhibitor;
mineralischem Füllstoff mit einer Korngrößenverteilung zwischen 0,5 und 100 µm
und einem oberflächenreaktiven Reagenz,
dadurch gekennzeichnet, daß
das oberflächenreaktive Reagenz in Mengen von 0,3 bis 5 Gewichtsteilen so dosiert ist, daß ein Viskositätsminimum der Masse vorliegt;
daß das oberflächenreaktive Reagenz eine Verbindung der Formel
$R-(-X-)_n-OPO_3H_2$
(X = Ethylenoxid oder Propylenoxid,
n = 0, 1, 2, 3, ....., 40,
R = aromatischer oder aliphatischer Rest mit einer Kohlenstoffzahl von 5 bis 40)
darstellt;
daß der im Styrolmonomer gelöste oder dispergierte Thermoplast Polystyrol oder Polyethylen ist
und daß der mineralische Füllstoff in einer Menge von 250 bis 350 Gewichtsteilen in der Masse verteilt ist.